# EUROPEAN PATENT SPECIFICATION

(11) **EP 4 077 577 B1**
(45) Date of publication and mention of the grant of the patent: **05.08.2026**
(21) Application number: 19956566.4
(22) Date of filing: 17.12.2019
(51) Int. Cl.: C08K 3/014, B01J 31/02, B01J 31/04, C08G 65/336, C08K 3/013, C08K 5/00, C08K 5/12

(54) **SEALANT COMPOSITION**
DICHTMITTELZUSAMMENSETZUNG
COMPOSITION D'AGENT D'ÉTANCHÉITÉ

(43) Date of publication of application: 26.10.2022
(73) Proprietor: Dow Silicones Corporation, Midland, Michigan 48686 (US); Dow Global Technologies LLC, Midland, MI 48674 (US)
(72) Inventor: ZENG, Zhiping, Shanghai 201203 (CN); GUO, Yi, Shanghai 201203 (CN); LIU, Nanguo, Midland, Michigan 48686-0994 (US); SHEPHARD, Nick, Auburn, Michigan 48611 (US); WEI, Xing, Shanghai 201203 (CN); PENG, Jiang, Shanghai 201203 (CN); GAO, Song, Beijing 100783 (CN); TANG, Zhengming, Shanghai 201203 (CN); CHEN, Hongyu, Shanghai 201203 (CN)
(74) Representative: Murgitroyd & Company
(86) International application number: PCT/CN2019/125815
(87) International publication number: WO 2021/119971

(56) References cited:
- WO-A1-2019/024430
- CN-A- 1 597 824
- CN-A- 1 597 824
- US-A1- 2005 288 415
- US-A1- 2007 237 912
- US-A1- 2010 143 712
- US-A1- 2013 338 289
- US-A1- 2013 338 289
- US-A1- 2015 159 051
- US-A1- 2017 101 564
- US-A1- 2018 298 252

## Description

This disclosure is concerned with the provision of one-part condensation curable silyl-modified polymer (SMP) based sealant compositions in particular one-part condensation curable SMP based sealant compositions containing a catalyst comprising (i) a titanate and/or zirconate and (ii) a metal carboxylate salt which compositions upon cure provide elastomeric sealants having low modulus and a high elastic recovery.

Room temperature vulcanizable (RTV) SMP based sealant compositions are well known. Generally, such compositions comprise polymers comprising silanol (-Si-OH) containing terminal groups attached to suitable organic polymer backbones or Si-alkoxy containing terminal groups attached to suitable organic polymer backbones and one or more suitable cross-linking agents designed to react with the -OH and/or alkoxy groups and thereby cross-link the composition to form an elastomeric sealant product. One or more additional ingredients such as catalysts, reinforcing fillers, non-reinforcing fillers, diluents (e.g. plasticisers and/or extenders), chain extenders, flame retardants, solvent resistant additives and biocides are often also incorporated into these compositions as and when required. Room temperature vulcanizable (RTV) SMP based sealant compositions may be one-part compositions or multiple-part compositions. One-part compositions are generally stored in a substantially anhydrous form to prevent premature cure. The main, if not sole source, of moisture in these compositions are the inorganic fillers, e.g. silica when present. Said fillers may be rendered anhydrous before intermixing with other ingredients or water/moisture may be extracted from the mixture during the mixing process to ensure that the resulting sealant composition is substantially anhydrous.

SMP sealant compositions having at least one Si-alkoxy bond, e.g. Si-methoxy bond in the terminal reactive silyl group and having a polyoxyalkylene polymer as the organic polymeric backbone are widely used for sealants in the construction industry because they have low viscosity and good moisture permeability, adhesion, and weather resistance. These sealants are often required to provide low-modulus cured products capable of being highly stretched by a small amount of stress for use in a variety of applications not least in the construction industry. The construction industry prefers one-component compositions to negate the need for mixing ingredients before application and compositions with excellent workability.

Low modulus room temperature vulcanisable (RTV) SMP sealant compositions can be used in a wide variety of applications. For example, they have achieved considerable commercial success as highway sealants and more recently in the construction industry. In certain applications, such as the construction of high-rise buildings, it is desirable and often critical to utilize low modulus sealants and/or adhesives for adhering window panes to the frames (metal or otherwise) of a building structure. The low modulus property enables the resulting cured elastomers to easily compress and expand with building movement without causing cohesive or adhesive failure.

Indeed recent architectural trends towards "mirrored" high rise buildings, that is, high rise buildings where the exterior of the building has the appearance of being a large mirror, for both aesthetic and energy-saving reasons, have resulted in there being a great deal of interest in providing suitable low modulus silicone sealants to deliver such effects.

Low modulus sealants typically rely on high molecular weight/chain length polydiorganosiloxane polymers which are end-blocked with reactive groups but have low levels of reactive groups attached along the polymer chain in order to generate cross-linked elastomeric products with low cross-link densities. Such polymers have often been prepared using chain extension processes for which suitable reactive silanes may be utilised as chain extenders during the curing of the composition. However, the use of such high molecular weight polymers typically results in high viscosity compositions especially when reinforcing fillers are also introduced into the composition.

Reinforcing fillers make important contributions to both the cost and rheology of compositions and to properties of resulting elastomeric materials formed from the composition upon cure, e.g. abrasion resistance, tensile and tear strength, hardness and modulus. For example, fine particle fumed silicas are used in compositions from which sealants are made in order to improve strength in the cured elastomer. Inclusion of filler as well as the high molecular weight polymers in a liquid composition leads to stiffening of the composition and a reduction in flowability of the composition, which leads to a need for increased applied shear during mixing to achieve the desired homogenous mixed state of the composition as greater amounts of filler are used. This can be a major problem in room temperature cure materials which are often sought to be gunnable i.e. applied by means of pushing uncured sealant out of a sealant tube using a sealant gun.

The introduction of unreactive liquid plasticisers/extenders (sometimes referred to as process aids) has been utilised as a means of lowering viscosity of uncured compositions. However, once cured the unreactive liquids within the cured sealant may migrate and potentially bleed out of the sealant which, over an extended period of time, can result in the sealant failing and often causing staining and discoloration in/on adjacent substrates.

Low-modulus sealants prepared from compositions containing tetravalent tin based catalysts tend to lose the ability to expand and recover because the use of the tetravalent tin compound as catalyst appears to cause a reduction in the recovery of the cured product so that, the product cannot follow the expansion and shrinkage.

The standard JC/T881 classifies joint sealants which have a low modulus and high elastic recovery in classes 35LM and 50LM. Sealants meeting the technical requirements to be included in these classes are recognised as high-grade sealants, suitable as construction sealants, more particularly as exterior facing sealants. Whilst SMP based sealants which meet the requirements of class 35LM and/or 50 LM according to standard JC/T881 are known, they generally, contain organotin compounds as catalysts and/or phthalate-containing plasticizers both of which can have regulatory issues.

It is well known to people skilled in the art that alkoxy titanium compounds, i.e. alkyl titanates, are suitable catalysts for formulating one component moisture curable silicones (References: Noll, W.; Chemistry and Technology of Silicones, Academic Press Inc., New York, 1968, p. 399, Michael A. Brook, silicon in organic, organometallic and polymer chemistry, John Wiley & sons, Inc. (2000), p. 285). Titanate catalysts have been widely used in skin or diffusion cured one-part condensation curing compositions. Skin or diffusion cure (e.g. moisture/condensation) commences with the initial formation of a cured skin at the composition/air interface after the sealant/encapsulant being applied on to a substrate surface. Subsequent to the generation of the surface skin the cure speed is dependent on the speed of diffusion of moisture from the sealant/encapsulant interface with air to the inside (or core), and the diffusion of condensation reaction by-product/effluent from the inside (or core) to the outside (or surface) of the material and the gradual thickening of the cured skin over time from the outside/surface to the inside/core. These compositions are typically available in one-part packages that are applied in a layer that is ≤ 15 mm thick. Layers thicker than 15 mm are known to result in the presence of uncured material in the depth of the otherwise cured elastomer because moisture is very slow to diffuse into very deep sections.

The following documents may be useful in further understanding the invention. US 2013/338289 discloses a one or more component moisture cure organosiloxane composition that has strength in an uncured state (commonly referred to in the industry as "green strength") and its uses. The composition comprises an organopolysiloxane polymer having a viscosity of at least 1000 mPa·s at 25° C. and not less than two silicon-bonded hydroxyl groups and/or silicon bonded hydrolysable groups; a suitable catalyst; a cross-linker adapted to react with organopolysiloxane polymer when catalysed with the catalyst; and optionally one or more rheology modifiers and 0 to 10% by weight of the composition of one or more extenders or plasticisers but in particular the composition contains a precipitated calcium carbonate filler in an amount of from 50 to 70 weight % of the total composition. CN 1 597 824 relates to a surface-coating polyurethane modified organic silicon sealant, comprising in weight share: hydroxyl-capped poly-organic oxosilane 100 shares, isocyanic acid radical-capped polyurethane preformed polymer 5-10 shares, aminoalkyl silane coupling agent 1-2 shares, filling 80-100 shares, cross-linking agent 2-4 shares, and catalyst 0.15-0.25 share. US 2018/298252 discloses one part moisture curable adhesive composition having improved heat stability comprising a silyl terminated polymer, a catalyst and a particular phosphite compound. The phosphite compound has three groups wherein at least two of the groups are aryl groups, but preferably all three of the groups are aryl groups. US 2017/101564 provides a moisture-curing sealant comprising a) at least one silane-functional polymer and b) at least one catalyst for the crosslinking of the silane-functional polymer, said sealant being free of organotin compounds and having, in the cured state, a secant modulus at 100% elongation and 23° C., determined to ISO 8339, of less than 0.4 MPa and a resilience at 100% elongation, determined to ISO 7389, of greater than 70%.

The disclosure herein seeks to provide a suitable alternative condensation curable SMP based sealant composition, which upon cure provides an elastomeric sealant with a low modulus e.g. ≤ 0.4 MPa at 100% elongation and a high elastic recovery of ≥ 80% after 100% extension.

In one aspect of the present invention there is provided a one-part condensation curable silyl modified polymer (SMP) based sealant composition comprising:-
(a) a silyl modified organic polymer having at least two (R)ₘ(Y¹)₃₋ₘ- Si groups per molecule where each R is hydroxyl or a hydrolysable group, each Y¹ is an alkyl group containing from 1 to 8 carbons and m is 1, 2 or 3, which organic polymer is selected from polyethers, hydrocarbon polymers, acrylate polymers, polyesters, polyurethanes and polyureas;
   and
(b) a reinforcing filler
(c) one or more plasticisers
   and
(d) a catalyst comprising (i) a titanate and/or zirconate and (ii) a metal carboxylate salt selected from zinc (II) carboxylates, aluminium (III) carboxylates, bismuth (III) carboxylates and/or zirconium (IV) carboxylates, zinc (II) alkylcarboxylates, aluminium (III) alkylcarboxylates, bismuth (III) alkylcarboxylates and/or zirconium (IV) alkylcarboxylates or mixtures thereof.

In a further aspect of the present invention there is provided a method of making the above composition by mixing all the ingredients together.

In a yet further aspect of the present invention there is provided an elastomeric sealant material which is the cured product of the composition as hereinbefore described.

In a yet further aspect of the present invention there is provided a use of the aforementioned composition as a sealant in the facade, insulated glass, window construction, automotive, solar and construction fields.

In another aspect of the present invention there is provided a method for filling a space between two substrates so as to create a seal therebetween, comprising:
a) providing a one-part condensation curable silyl-modified polymer (SMP) based sealant composition as hereinbefore described, and either
b) applying the silicone composition to a first substrate, and bringing a second substrate in contact with the silicone composition that has been applied to the first substrate, or
c) filling a space formed by the arrangement of a first substrate and a second substrate in contact with the silicone composition and curing the silicone composition.

Particular embodiments are set forth in the dependent claims.

The concept of "comprising" where used herein is used in its widest sense to mean and to encompass the notions of "include" and "consist of".

For the purpose of this application "Substituted" means one or more hydrogen atoms in a hydrocarbon group has been replaced with another substituent. Examples of such substituents include halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amino-functional groups, amido-functional groups, and cyanofunctional groups; sulphur atoms; and sulphur atom containing groups such as mercapto groups.

Component (a) is a silyl modified organic polymer having at least two (R)ₘ(Y¹)₃₋ₘ- Si groups per molecule where each R is hydroxyl or a hydrolysable group, each Y¹ is an alkyl group containing from 1 to 8 carbons and m is 1, 2 or 3.

The (R)ₘ(Y¹)₃₋ₘ- Si groups of silyl modified organic polymer (a) may be linked to the organic polymer backbone via any suitable linkage or may be directly bonded where appropriate. Typically, the organic polymer is selected from polyethers, hydrocarbon polymers, acrylate polymers, polyurethanes and polyureas. For example, in the case of silyl modified polyether polymers, (R)ₘ(Y¹)₃₋ₘ- Si groups may be terminal groups linked to the polyether polymer backbone via the following

(R)ₘ(Y¹)₃₋ₘ -Si - D- [NH-C(=O)]ₖ-
Where R, Y¹ and m are as hereinbefore described D is a divalent C₂₋₆ alkylene group, alternatively a C₂₋₄ alkylene group, alternatively an ethylene or propylene group and k is 1 or 0. So a silyl modified polyether might be depicted as
(R)ₘ(Y¹)₃₋ₘ -Si -D-[NH-C(=O)]ₖ-O[CH(CH₃)-CH₂-O]ᵤ -[C(=O) -NH]ₖ-D- Si(Y¹)₃₋ₘ (R)ₘ wherein in the above example the polyether repeating group, for the sake of example, is an oxypropylene group [CH(CH₃) - CH₂-O] with u being the number of repeating units.

Each substituent R in an (R)ₘ(Y¹)₃₋ₘ- Si group may independently be a hydroxyl group or a hydrolysable group. The hydrolysable groups may be selected from acyloxy groups (for example, acetoxy, octanoyloxy, and benzoyloxy groups); ketoximino groups (for example dimethyl ketoximo, and isobutylketoximino); alkoxy groups (for example methoxy, ethoxy and propoxy) and alkenyloxy groups (for example isopropenyloxy and 1-ethyl-2-methylvinyloxy). However, it is preferred that each R is an OH group or an alkoxy group having from 1 to 10 carbons, alternatively an OH group or an alkoxy group having from 1 to 6 carbons, alternatively an OH group, a methoxy group or an ethoxy group, alternatively a methoxy group or an ethoxy group. Substituent Y¹ is an alkyl group containing from 1 to 8 carbons, alternatively 1 to 6 carbons, alternatively 1 to 4 carbons. Hence, when R is OH or a hydrolysable group and the hydrolysable group is an alkoxy group, the (R)ₘ(Y¹)₃₋ₘ- Si groups may be selected from - (Y¹)SiOH₂, -(Y¹)₂SiOH, -Y¹Si(OR^{b})_{z}, -Si(OR^{b})₃, -(Y¹)₂SiOR^{b} with R^{b} being an alkyl group having from 1 to 8 carbons.

As previously mentioned, the silyl modified organic polymer (a) has an organic backbone having terminal curable silyl groups. The organic polymeric backbone may be selected from polyethers, hydrocarbon polymers, acrylate polymers, polyurethanes and polyureas.

When the silyl modified organic polymer (a) is an alkoxy silyl terminated organic polymer with the organic polymer being a polyether as previously described. Whereas the polymer backbone is exemplified in the structure above as

(-CₚH₂ₚ-O-)_{y}

wherein p is an integer from 2 to 4 inclusive and y is an integer ≥ 4 i.e. of at least four. An example might be a polyether having the following repeating groups, for example, [CH(CH₃) - CH₂-O]_{y}
The number average molecular weight (Mn) of each polyether may range from about 300 to about 10,000 which may be determined by way of ASTM D5296-05 and calculated as polystyrene molecular weight equivalents. Moreover, the oxyalkylene units are not necessarily identical throughout the polyoxyalkylene, but can differ from unit to unit. A polyoxyalkylene, for example, can comprise oxyethylene units (-C₂H₄-O-), oxypropylene units (-C₃H₆-O-) or oxybutylene units (-C₄H₈-O-), or mixtures thereof. Preferably the polyoxyalkylene polymeric backbone consists essentially of oxyethylene units or oxypropylene units. Polyoxyalkylenes usually have terminal hydroxyl groups and can readily be modified with moisture curable silyl groups, for example by reaction with an excess of an alkyltrialkoxysilane to introduce terminal alkyldialkoxysilyl groups as previously discussed. Alternatively, polymerization may occur via a hydrosilylation type process. Polyoxyalkylenes consisting wholly or mainly of oxypropylene units have properties suitable for many sealant and/or adhesive applications.

Other polyoxyalkylenes may include for example: units of the structure:

-[-R^{e}-O-(-R^{f}-O-)ₕ-Pn-CR^{g}₂-Pn-O-(-R^{f}-O-)_{q1}-R^{e}]-

in which Pn is a 1,4-phenylene group, each R^{e} is the same or different and is a divalent hydrocarbon group having 2 to 8 carbon atoms, each R^{f} is the same or different and is an ethylene group or propylene group, each R^{g} is the same or different and is a hydrogen atom or methyl group and each of the subscripts h and q1 is a positive integer in the range from 3 to 30.

Alternatively, the organic polymeric backbone may be an acrylate polymer backbone. The acrylate polymer is an addition polymerised polymer of acrylate and/or methacrylate ester monomers, which comprise at least 50%, (i.e. from 50% to 100%) by weight of the monomer units in the acrylate polymer. Examples of acrylate ester monomers are n-butyl, isobutyl, n-propyl, ethyl, methyl, n-hexyl, n-octyl and 2-ethylhexyl acrylates. Examples of methacrylate ester monomers are n-butyl, isobutyl, methyl, n-hexyl, n-octyl, 2-ethylhexyl and lauryl methacrylates. The acrylate polymer preferably has a glass transition temperature (Tg) below ambient temperature; acrylate polymers are generally preferred over methacrylates since they form lower Tg polymers. Polybutyl acrylate is particularly preferred. The acrylate polymer can contain lesser amounts of other monomers such as styrene, acrylonitrile or acrylamide. The acrylate(s) can be polymerized by various methods such as conventional radical polymerization or living radical polymerization such as atom transfer radical polymerization, reversible addition-fragmentation chain transfer polymerization, or anionic polymerization including living anionic polymerisation.

Silyl modified organic polymer (a) may also be a silyl modified hydrocarbon polymer. Examples of silyl modified hydrocarbon polymers include silyl modified polyisobutylene. Silyl modified polyisobutylene can for example contain curable silyl groups derived from a silylsubstituted alkyl acrylate or methacrylate monomer such as alkoxydialkylsilylpropyl methacrylate, dialkoxyalkylsilylpropyl methacrylate or trialkoxysilylpropyl methacrylate, which can be reacted with a polyisobutylene.

Typically, the silyl modified organic polymer (a) is present in the composition in an amount of from 10 to 80% by weight of the composition, alternatively from 10 to 60% by weight of the composition, alternatively from 15 to 50% by weight of the composition, alternatively from 15 to 40% by weight of the composition.

The composition also comprises a reinforcing filler (b). Reinforcing filler (b) may contain one or more finely divided, reinforcing fillers such as precipitated calcium carbonate, fumed silica colloidal silica and/or precipitated silica including, for example, rice hull ash. Typically, the surface area of the reinforcing filler (b) is at least 15 m²/g in the case of precipitated calcium carbonate measured in accordance with the BET method (ISO 9277: 2010), alternatively 15 to 50 m²/g, alternatively 15 to 25 m²/g in the case of precipitated calcium carbonate. Silica reinforcing fillers have a typical surface area of at least 50 m²/g in accordance with the BET method (ISO 9277: 2010). In one embodiment reinforcing filler (b) is a precipitated calcium carbonate, precipitated silica and/or fumed silica; alternatively, precipitated calcium carbonate. In the case of high surface area fumed silica and/or high surface area precipitated silica, these may have surface areas of from 75 to 400 m²/g measured in accordance with the BET method (ISO 9277: 2010), alternatively of from 100 to 300 m²/g in accordance with the BET method (ISO 9277: 2010).

Reinforcing filler (b) may be hydrophobically treated for example with one or more aliphatic acids, e.g. a fatty acid such as stearic acid or a fatty acid ester such as a stearate, or with organosilanes, organosiloxanes, or organosilazanes hexaalkyl disilazane or short chain siloxane diols to render the filler(s) hydrophobic and therefore easier to handle and obtain a homogeneous mixture with the other adhesive components. The surface treatment of the fillers makes them easily wetted by the silyl modified organic polymers (a). These surface modified fillers do not clump and can be homogeneously incorporated into the silicone polymer (a) of the base component. This results in improved room temperature mechanical properties of the uncured compositions. The fillers may be pre-treated or may be treated in situ when being mixed with silyl modified organic polymer (a).

Typically, the reinforcing fillers are present in the composition in an amount of from 5 to 65% by weight of the composition, alternatively from 20 to 65% by weight of the composition, alternatively from 25 to 60% by weight of the composition, alternatively from 30 to 60% by weight of the composition.

Component (c) of the composition is one or more plasticisers. Plasticisers (c) are often utilised in compositions containing silyl modified organic polymers (a). Given the fact that the backbone of silyl modified organic polymer (a) is substantially organic (i.e. not containing Si-O-Si bonds in the polymer backbone) the plasticisers (c) are generally selected from those which are suitable for plasticizing silyl modified organic polymer (a).

### Examples of plasticizers (c) include:-

Divalent alcohols (e.g. ethylene glycol, diethylene glycol, triethylene glycol, propylene glycol, dipropylene glycol); polyether polyols (e.g. polyethylene glycol, polypropylene glycol, polytetramethylene glycol and/or hydroxyl terminated polypropylene/polyethylene ether copolymers which have a molecular weight of 500 or higher, or even of 1,000 or higher, such as commercially hydroxyl terminated polypropylene ethers are sold under the VORANOL Trade Mark by the Dow Chemical Company;

Polyether derivatives obtained by converting the hydroxy groups of these polyether polyols into ester groups, ether groups or other groups; Alkoxy terminated polypropylene ethers, alkoxy terminated polyethylene ethers, alkoxy terminated polypropylene/polyethylene ether co-polymers esters of polyalkylene glycols, such as diethylene glycol dibenzoate, triethylene glycol dibenzoate, and pentaerythritol esters;

Polyester plasticizers prepared from dibasic acids (e.g. sebacic acid, adipic acid, azelaic acid, phthalic acid) i.e. phthalic acid esters such as dibutyl phthalate, diheptyl phthalate, bis(2-ethylhexyl)phthalate, diisononyl phthalate (DINP) diisodecyl phthalate (DIDP), dioctyl phthalate (DOP) diisooctylphthalate (DIOP), and butyl benzyl phthalate; cyclohexanedicarboxylates obtained by hydrogenating the above phthalic acid esters such as those marketed by BASF under the trade name Hexamoll DINCH;

Non-aromatic dibasic acid esters such as dioctyl adipate, dioctyl sebacate, dibutyl sebacate, and isodecyl succinate; cyclohexanedicarboxylic acid esters such as diisononyl cyclohexanedicarboxylate and bis(2-ethylhexyl)cyclohexanedicarboxylate; aliphatic esters such as butyl oleate and methyl acetyl ricinolate; phosphoric acid esters such as tricresyl phosphate and tributyl phosphate; trimellitic acid esters; and/or

### Hydrocarbon oils such as alkyl diphenyls and partially hydrogenated terphenyls.

Plasticiser (c) is typically present in an amount of from 5 to 40% by weight of the composition, alternatively from 5 to 35% by weight of the composition, alternatively from 10 to 30% by weight of the composition.

As hereinbefore described the catalyst (d) of the present invention comprises (i) a titanate and/or zirconate and (ii) a metal carboxylate salt. The titanate and/or zirconate (i) chosen for inclusion in a particular silicone sealant composition depends upon the speed of cure required. Titanate and/or zirconate based catalysts may comprise a compound according to the general formula Ti[OR⁹]₄ or Zr[OR⁹]₄ where each R⁹ may be the same or different and represents a monovalent, primary, secondary or tertiary aliphatic hydrocarbon group which may be linear or branched containing from 1 to 10 carbon atoms. Optionally the titanate/zirconate may contain partially unsaturated groups.
However, preferred examples of R⁹ include but are not restricted to methyl, ethyl, propyl, isopropyl, butyl, tertiary butyl and a branched secondary alkyl group such as 2, 4-dimethyl-3-pentyl. Preferably, when each R⁹ is the same, R⁹ is an isopropyl, branched secondary alkyl group or a tertiary alkyl group, in particular, tertiary butyl. Suitable examples include for the sake of example, tetra n-butyl titanate, tetra t-butyl titanate, tetra t-butoxy titanate and tetraisopropoxy titanate (as well as zirconate equivalents). Alternatively, the titanate/zirconate may be chelated. The chelation may be with any suitable chelating agent such as an alkyl acetylacetonate such as methyl or ethylacetylacetonate, for example diisopropoxydiethylacetoacetate titanate. Alternatively, the titanate/zirconate may be monoalkoxy titanates bearing three chelating agents such as for example 2-propanolato, tris isooctadecanoato titanate. In one embodiment (i) is a titanate or chelated titanate.

The catalyst (d) of the present invention also comprises (ii) a metal carboxylate salt wherein the metal is selected from zinc (II) carboxylates, aluminium (III) carboxylates, bismuth (III) carboxylates and/or zirconium (IV) carboxylates, zinc (II) alkylcarboxylates, aluminium (III) alkylcarboxylates, bismuth (III) alkylcarboxylates and/or zirconium (IV) alkylcarboxylates or mixtures thereof. Metal carboxylate salts wherein the metal is selected from one or more of zinc, aluminium, bismuth, iron and/or zirconium are also disclosed. The carboxylate groups are of the formula R¹⁵COO⁻ where R¹⁵ is selected from hydrogen, alkyl groups, alkenyl groups, and aryl groups. Examples of useful alkyl groups for R¹⁵ include alkyl groups having from 1 to 18 carbon atoms, alternatively 1 to 8 carbon atoms. Examples of useful alkenyl groups for R¹⁵ include alkenyl groups having from 2 to 18 carbon atoms, alternatively 2 to 8 carbon atoms such as vinyl, 2-propenyl, allyl, hexenyl, and octenyl. Examples of useful aryl groups for R¹⁵ include aryl groups having from 6 to 18 carbon atoms, alternatively 6 to 8 carbon atoms such as phenyl and benzyl. Alternatively, R¹⁵ is methyl, 2-propenyl, allyl, and phenyl. Hence the metal carboxylate salt (ii) in catalyst (d) is zinc (II) carboxylates, aluminium (III) carboxylates, bismuth (III) carboxylates and/or zirconium (IV) carboxylates, zinc (II) alkylcarboxylates, aluminium (III) alkylcarboxylates, bismuth (III) alkylcarboxylates and/or zirconium (IV) alkylcarboxylates or mixtures thereof. Specific examples of metal carboxylate salt (ii) in catalyst (d) include, zinc ethylhexanoate, bismuth ethylhexanoate , zinc stearate, zinc undecylenate, zinc neodecanoate and iron (III) 2-ethylhexanoate. The titanate and/or zirconate (i) and metal carboxylate salt (ii) of catalyst (d) is provided in a molar ratio of 1:4 to 4:1.

The catalyst (d) is typically present in an amount of from 0.25 to 4.0% by weight of the composition, alternatively from 0.25 to 3% by weight of the composition, alternatively from 0.3% to 2.5% by weight of the composition.

Also disclosed but not part of the invention is where optionally the catalyst (d) may additionally include a tin catalyst. Any suitable tin based condensation catalyst suitable for participation in the catalysis of the cure. Examples include tin triflates, organic tin metal catalysts such as triethyltin tartrate, tin octoate, tin oleate, tin naphthate, butyltintri-2-ethylhexoate, tin butyrate, carbomethoxyphenyl tin trisuberate, isobutyltintriceroate, and diorganotin salts especially diorganotin dicarboxylate compounds such as dibutyltin dilaurate, dimethyltin dibutyrate, dibutyltin dimethoxide, dibutyltin diacetate, dimethyltin bisneodecanoate, dibutyltin dibenzoate, stannous octoate, dibutyltin bis(2,4-pentanedionate, dimethyltin dineodecanoate (DMTDN) and dibutyltin dioctoate.

When present, the tin based catalyst is typically present in an amount of from up to 1.0% by weight of the composition, alternatively from 0.01 to 0.5% by weight of the composition, alternatively from 0.02 to 0.3% by weight of the composition.

The composition as described herein may additionally include one or more additional additives if considered appropriate for the end use. These may include non-reinforcing fillers, rheology modifiers, adhesion promoters, stabilizers such as anti-oxidants, UV and/or light stabilizers and light stabilizers, pigments, water scavengers, (typically the same compounds as those used as cross-linkers or silazanes), and fungicides and/or biocides. It will be appreciated that some of the additives are included in more than one list of additives. Such additives would then have the ability to function in all the different ways referred to.

Suitable non-reinforcing fillers may comprise, for example, crushed quartz, ground calcium carbonate, diatomaceous earths, barium sulphate, iron oxide, titanium dioxide and carbon black, talc, wollastonite may be present in the composition. Other non-reinforcing fillers which might be used alone or in addition to the above include aluminite, calcium sulphate (anhydrite), gypsum, calcium sulphate, magnesium carbonate, clays such as kaolin, aluminum trihydroxide, magnesium hydroxide (brucite), graphite, copper carbonate, e.g. malachite, nickel carbonate, e.g. zarachite, barium carbonate, e.g. witherite and/or strontium carbonate e.g. strontianite.

Aluminum oxide, silicates from the group consisting of olivine group; garnet group; aluminosilicates; ring silicates; chain silicates; and sheet silicates. The olivine group comprises silicate minerals, such as forsterite and Mg₂SiO₄. The garnet group comprises ground silicate minerals, such as pyrope; Mg₃Al₂Si₃O₁₂; grossular; and Ca₂Al₂Si₃O₁₂. Aluninosilicates comprise ground silicate minerals such as sillimanite; Al₂SiO₅; mullite; 3Al₂O₃.2SiO₂; kyanite; and Al₂SiO₅
The ring silicates group comprises silicate minerals such as cordierite and Al₃(Mg,Fe)₂[Si₄AlO₁₈]. The chain silicates group comprises ground silicate minerals such as wollastonite and Ca[SiO₃].

The sheet silicates group comprises silicate minerals such as mica; K₂AI₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[Si₄O₁₀](OH)₈; and vermiculite.

The non-reinforcing fillers may also be surface treated to be rendered hydrophobic using analogous treating agents as discussed for the reinforcing fillers (b) above.

Rheology modifiers which may be incorporated in moisture curable compositions according to the invention include silicone organic co-polymers such as those described in EP0802233 based on polyols of polyethers or polyesters; waxes such as polyamide waxes, nonionic surfactants selected from the group consisting of polyethylene glycol, polypropylene glycol, ethoxylated castor oil, oleic acid ethoxylate, alkylphenol ethoxylates, copolymers or ethylene oxide and propylene oxide, and silicone polyether copolymers; as well as silicone glycols. For some systems these rheology modifiers, particularly copolymers of ethylene oxide and propylene oxide, and silicone polyether copolymers, may enhance the adhesion to substrates, particularly plastic substrates.

When present the rheology modifier is present in an amount of up to 10% by weight of the composition, alternatively up to 7.5% by weight of the compositions, alternatively up to 5% of the composition.

Suitable adhesion promoters may comprise alkoxysilanes of the formula

R¹⁴_{d}Si(OR¹⁵)_{(4-d)}

where subscript d is 1, 2, or 3, alternatively d is 3. Each R¹⁴ is independently a monovalent organofunctional group. R¹⁴ can be an epoxy functional group such as glycidoxypropyl or (epoxycyclohexyl)ethyl, an amino functional group such as aminoethylaminopropyl or aminopropyl, a methacryloxypropyl, a mercapto functional group such as mercaptopropyl or an unsaturated organic group. Each R¹⁵ is independently an unsubstituted, saturated hydrocarbon group of at least 1 carbon atom. R¹⁵ may have 1 to 4 carbon atoms, alternatively 1 to 2 carbon atoms. R¹⁵ is exemplified by methyl, ethyl, n-propyl, and iso- propyl.

Alternatively the adhesion promoter may be glycidoxypropyltrimethoxysilane or a multifunctional material obtained by reacting two or more of the above. For examples the reaction product of an alkylalkoxysilicone e.g. trimethoxymethylsilane; an aminoalkoxysilane, e.g. 3-aminopropyl trimethoxysilane and an epoxyalkoxysilane e.g. glycidoxypropyl trimethoxysilane; in a weight ratio of (i):(ii):(iii) of 0.1-6:0.1-5:1.

Examples of suitable adhesion promoters may include molecules of the structure

(R'O)₃Si(CH₂)ₙN(H)-(CH₂)ₑNH₂

in which each R' may be the same or different and is an alkyl group containing from 1 to 10 carbon atoms, n is from 2 to 10 and e is from 2 to 10;

The adhesion promoter is an optional ingredient which may be present in an amount up to 3% by weight of the composition, alternatively up to 2% of the composition, alternatively in an amount of up to 1% of the composition. Preferably, the speed of hydrolysis of the adhesion promoter should be lower than the speed of hydrolysis of the cross-linker in order to favour diffusion of the molecule towards the substrate rather than its incorporation in the product network.

Any suitable anti-oxidant(s) may be utilised, if deemed required. Examples may include: ethylene bis (oxyethylene) bis(3-tert-butyl-4-hydroxy-5(methylhydrocinnamate) 36443-68-2; tetrakis[methylene(3,5-di-tert-butyl-4-hydroxy hydrocinnamate)]methane 6683-19-8; octadecyl 3,5-di-tert-butyl-4-hydroxyhyrocinnamate 2082-79-3; N,N'-hexamethylene-bis (3,5-di-tert-butyl-4-hydroxyhyrocinnamamide) 23128-74-7; 3,5-di-tert-butyl-4-hydroxyhydrocinnamic acid,C7-9 branched alkyl esters 125643-61-0; N-phenylbenzene amine, reaction products with 2,4,4-trimethylpentene 68411-46-1; e.g. anti-oxidants sold under the Irganox^{®} name from BASF.

UV and/or light stabilisers may include, for the sake of example include benzotriazole, ultraviolet light absorbers and/or hindered amine light stabilizers (HALS) such as the TINUVIN^{®} product line from Ciba Specialty Chemicals Inc.

Each type of stabilizer mentioned may be present as and when required in an amount of from 0.1 to 1.0% by weight of the composition.

Pigments are utilized to color the composition as required. Any suitable pigment may be utilized providing it is compatible with the composition. Pigments and/or colored (non-white) non-reinforcing fillers, e.g. carbon black may be utilized to color the composition and ultimately the end elastomeric product e.g. sealant post cure. When present carbon black will function as both a non-reinforcing filler and colorant.

Pigments may be present in the composition in any desired amount providing it does not negatively affect the physical properties of the composition or resulting elastomeric product. Whilst optional they may be present in amounts of up to 20% by weight of the composition, alternatively up to 10% by weight of the composition, alternatively up to 5% by weight of the composition.

Any suitable moisture/water scavenger may be used if required, for example orthoformic acid esters, molecular sieves disilazanes, polysilazanes and/or one or more silanes of the structure

R⁶ⱼSi(OR⁵)₄₋ⱼ

where each R⁵ may be the same or different and is an alkyl group containing at least one carbon atom;
j is 1 or 0; and
R⁶ is a silicon-bonded organic group selected from a substituted or unsubstituted straight or branched monovalent hydrocarbon group having at least one carbons, a cycloalkyl group, an aryl group, an aralkyl group or any one of the foregoing wherein at least one hydrogen atom bonded to carbon is substituted by a halogen atom, or an organic group having an epoxy group, a glycidyl group, an acyl group, a carboxyl group, an ester group, an amino group, an amide group, a (meth)acryl group, a mercapto group or an isocyanate group;

Any suitable disilazane or polysilazane moisture/water scavenger may be used, for example silazanes which may be linear or cyclic such as hexamethyldisilazane, hexamethylcyclotrisilazane. octamethyltetrasilazane, trimethyltriphenylcyclotrisilazane, trivinyltrimethylcyclotrisilazane. The moisture/water scavenger may also be one or more and polysilazanes i.e. polymers containing repeating units such as arylensilazanes, such as phenylene silazanes, and alkylenesilazanes such as methylenesilazanes repeating units for example: Hexamethyldisilazane, hexamethylcyclotrisilazane. octamethyltetrasilazane, trimethyltriphenylcyclotrisilazane, and/or trivinyltrimethylcyclotrisilazane.

The moisture/water scavenger is also optional but may be present in the composition in an amount of up to 10% by weight of the composition. When present it is typically present in a range of from 0.1 to 7.5% by weight of the composition, alternatively from 0.2 to 5% by weight of the composition, alternatively from 0.3 to 3% by weight of the composition.

Biocides may additionally be utilized in the composition if required. It is intended that the term "biocides" includes bactericides, fungicides and algicides. Suitable examples of useful biocides, which may be utilized in compositions as described herein, include, for the sake of example:

Carbamates such as methyl-N-benzimidazol-2-ylcarbamate (carbendazim) and other suitable carbamates, 10,10'-oxybisphenoxarsine, 2-(4-thiazolyl)-benzimidazole, N-(fluorodichloromethylthio)phthalimide, diiodomethyl p-tolyl sulfone, if appropriate in combination with a UV stabilizer, such as 2,6-di(tert-butyl)-p-cresol, 3-iodo-2-propinyl butylcarbamate (IPBC), zinc 2-pyridinethiol 1-oxide, triazolyl compounds and isothiazolinones, such as 4,5-dichloro-2-(n-octyl)-4-isothiazolin-3-one (DCOIT), 2-(n-octyl)-4-isothiazolin-3-one (OIT) and n-butyl-1,2-benzisothiazolin-3-one (BBIT). Other biocides might include for example Zinc Pyridinethione, 1-(4-Chlorophenyl)-4,4-dimethyl-3-(1,2,4-triazol-1-ylmethyl)pentan-3-ol and/or 1-[[2-(2,4-dichlorophenyl)-4-propyl-1,3-dioxolan-2-yl] methyl]-1H-1,2,4-triazole.

The fungicide and/or biocide may suitably be present in an amount of from 0 to 0.3% by weight of the composition and may be present in an encapsulated form where required such as described in EP2106418.

The one-part condensation curable silyl modified polymer (SMP) based adhesive composition of the invention may comprise any combination of the following ingredients with the proviso that the total % weight is 100 wt. %;-
silyl modified organic polymer (a) is present in the composition in an amount of from 10 to 80% by weight of the composition, alternatively from 10 to 60% by weight of the composition, alternatively from 15 to 50% by weight of the composition, alternatively from 15 to 40% by weight of the composition;
reinforcing fillers (b) are present in the composition in an amount of from 5 to 65% by weight of the composition, alternatively from 20 to 65% by weight of the composition, alternatively from 25 to 60% by weight of the composition, alternatively from 30 to 60% by weight of the composition;
Plasticiser (c) is present in an amount of from 5 to 40% by weight of the composition, alternatively from 5 to 35% by weight of the composition, alternatively from 10 to 30% by weight of the composition; and
Catalyst (d) is present in an amount of from 0.25 to 4.0% by weight of the composition, alternatively from 0.25 to 3% by weight of the composition, alternatively from 0.3% to 2.5% by weight of the composition.

When present a rheology modifier is present in an amount of up to 10% by weight of the composition, alternatively up to 7.5% by weight of the compositions, alternatively up to 5% of the composition;
When present an adhesion promoter is present in an amount up to 3% by weight of the composition, alternatively up to 2% of the composition, alternatively in an amount of up to 1% of the composition.

When present the stabilizer or each different type of stabiliser present may be present in an amount of from 0.1 to 1.0% by weight of the composition; and the composition may comprise other additives as defined herein.

The compositions are preferably room temperature vulcanisable compositions in that they cure at room temperature without heating but may if deemed appropriate be accelerated by heating. Typically, the composition may be cured for any suitable period, for example the composition will cure about 2 to 3mm in depth after 24 hours curing at room temperature (approximately 23°C) and 50% relative humidity (RH).

Having both a low modulus and higher elastic recovery can endow the sealant with higher movement capability. While in general, low modulus sealants normally exhibit low elastic recovery the elastomeric product made from the composition herein has been developed to provide a modulus of less than 0.4 MPa at 100% elongation (ASTM D412-98a(2002)e1) and elastic recovery above than 80% after 100% extension using the test method described herein. Hence, the present composition and the resulting elastomeric material after cure, satisfies the requirements for the sealant to be in classes 35LM and 50LM based on the requirements set in standard JC/T881 by having a having a Balanced modulus and elastic recovery: a sealant formulation after cure has modulus less than 0.4 MPa at 100% elongation and elastic recovery above than 80% after 100% extension as well as good adhesion on concrete.

The ingredients and their amounts are designed to provide a low modulus and high extension sealant, adhesive and/or coating composition. Low modulus silicone sealant compositions are preferably "gunnable" i.e. they have a suitable extrusion capability i.e. a minimum extrusion rate of 10 ml/min as measured by ASTM C1183-04, alternatively 10 to 1000 mL/min, and alternatively 100 to 1000 mL/min.

The ingredients and their amounts in the sealant composition are selected to impart a movement capability to the post-cured sealant material. The movement capability is greater than 25 %, alternatively movement capability ranges from 25 % to 50 %, as measured by ASTM C719-13.

A sealant composition as hereinbefore described may be a gunnable sealant composition used for
(i) space/gap filling applications;
(ii) seal applications, such as sealing the edge of a lap joint in a construction membrane; or
(iii) seal penetration applications, e.g., sealing a vent in a construction membrane;
(iv) adhering at least two substrates together.
(v) a laminating layer between two substrates to produce a laminate of the first substrate, the sealant product and the second substrate.
In the case of (v) above when used as a layer in a laminate, the laminate structure produced is not limited to these three layers. Additional layers of cured sealant and substrate may be applied. The layer of gunnable sealant composition in the laminate may be continuous or discontinuous.

A sealant composition as hereinbefore described may be applied on to any suitable substrate. Suitable substrates may include glass; concrete; brick; stucco; metals, such as aluminium, copper, gold, nickel, silicon, silver, stainless steel alloys, and titanium; ceramic materials; plastics including engineered plastics such as epoxies, polycarbonates, poly(butylene terephthalate) resins, polyamide resins and blends thereof, such as blends of polyamide resins with syndiotactic polystyrene such as those commercially available from The Dow Chemical Company, of Midland, Michigan, U.S.A., acrylonitrile-butadiene-styrenes, styrene-modified poly(phenylene oxides), poly(phenylene sulfides), vinyl esters, polyphthalamides, and polyimides; cellulosic substrates such as paper, fabric, and wood; and combinations thereof. When more than one substrate is used, there is no requirement for the substrates to be made of the same material. For example, it is possible to form a laminate of plastic and metal substrates or wood and plastic substrates.

In the case of silicone sealant compositions as hereinbefore described, there is also provided a method for filling a space between two substrates so as to create a seal therebetween, comprising:
a) providing a one-part condensation curable silyl-modified polymer (SMP) based sealant composition as hereinbefore described, and either
b) applying the silicone composition to a first substrate, and bringing a second substrate in contact with the silicone composition that has been applied to the first substrate, or
c) filling a space formed by the arrangement of a first substrate and a second substrate with the silicone composition and curing.

In one alternative, a sealant composition as hereinbefore described may be a self-levelling highway sealant. A self-levelling sealant composition means it is "self-levelling" when extruded from a storage container into a horizontal joint; that is, the sealant will flow under the force of gravity sufficiently to provide intimate contact between the sealant and the sides of the joint space. This allows maximum adhesion of the sealant to the joint surface to take place. The self-levelling also does away with the necessity of tooling the sealant after it is placed into the joint, such as is required with a sealant which is designed for use in both horizontal and vertical joints. Hence, the sealant flow sufficiently well to fill a crack upon application. If the sealant has sufficient flow, under the force of gravity, it will form an intimate contact with the sides of the irregular crack walls and form a good bond; without the necessity of tooling the sealant after it is extruded into the crack, in order to mechanically force it into contact with the crack sidewalls.

Self-levelling compositions as described herein are useful as a sealant having the unique combination of properties required to function in the sealing of asphalt pavement. Asphalt paving material is used to form asphalt highways by building up an appreciable thickness of material, such as 20.32 cm, and for rehabilitating deteriorating concrete highways by overlaying with a layer of a thickness of about 10.16 cm. Asphalt overlays undergo a phenomenon known as reflection cracking in which cracks form in the asphalt overlay due to the movement of the underlying concrete at the joints present in the concrete. These reflection cracks need to be sealed to prevent the intrusion of water into the crack, which will cause further destruction of the asphalt pavement when the water freezes and expands.

In order to form an effective seal for cracks that are subjected to movement for any reason, such as thermal expansion and contraction, the seal material must bond to the interface at the sidewall of the crack and must not fail cohesively when the crack compresses and expands. In the case of the asphalt pavement, the sealant must not exert enough strain on the asphalt at the interface to cause the asphalt itself to fail; that is, the modulus of the sealant must be low enough that the stress applied at the bond line is well below the yield strength of the asphalt.

In such instances, the modulus of the cured material is designed to be low enough so that it does not exert sufficient force on the asphalt to cause the asphalt to fail cohesively. The cured material is such that when it is put under tension, the level of stress caused by the tension decreases with time so that the joint is not subjected to high stress levels, even if the elongation is severe.

Alternatively, the silicone elastomeric composition provided herein may be utilised as an elastomeric coating composition, e.g. as a barrier coating for construction materials or as a weatherproof coating for a roof, the composition may have a viscosity not dissimilar to a paint thereby enabling application by e.g. brush, roller or spray gun. A coating composition as described herein, when applied onto a substrate, may be designed to provide the substrate with e.g. long-term protection from air and water infiltration, under normal movement situations caused by e.g. seasonal thermal expansion and/or contraction, ultra-violet light and the weather. Such a coating composition can maintain water protection properties even when exposed to sunlight, rain snow or temperature extremes.

### Examples

Comparative sealant compositions were prepared using the compositions in Table 1 which can be seen to contain the essential ingredients and several optional ingredients.

**Table 1 Composition of Comparative Examples**

| | Comp. 1 (wt.%) | Comp. 2 (wt.%) | Comp. 3 (wt.%) | Comp. 4 (wt.%) |
|---|---|---|---|---|
| Kaneka Silyl^{™} SAX510 | 14. 25 | 13.71 | 13.90 | 14.25 |
| Kaneka Silyl^{™} SAX520 | 6.11 | 5.88 | 5.96 | 6.11 |
| Diisononyl phthalate (DINP) | 22.00 | 22.00 | 22.00 | 22.00 |
| Light Stabilizer | 0.23 | 0.23 | 0.23 | 0.23 |
| Irganox 1076 (antioxidant) | 0.23 | 0.23 | 0.23 | 0.23 |
| Rheology modifier | 2.20 | 2.20 | 2.20 | 2.20 |
| XTCC-201 Precipitated calcium carbonate | 22.0 | 22.0 | 22.0 | 22.00 |
| Omyacarb^{®} 1T Ground calcium carbonate | 29.8 | 29.8 | 29.8 | 29.80 |
| Titanium dioxide | 1.20 | 1.20 | 1.20 | 1.20 |
| vinyltrimethoxy silane | 1.40 | 1.40 | 1.40 | 1.40 |
| ethylenediaminepropyltrimethoxysilane | 0.07 | 0.07 | 0.07 | 0.07 |
| Methyl acetoacetate | | 0.480 | 0.336 | |
| Ethylhexanoic acid zinc salt Zn(EHA)₂ | 0.52 | | | |
| Ethylhexanoic acid bismuth salt Bi(EHA)₃ | | | | 0.75 |
| Tetra tertiary butyl titanate (TtBT) | | 0.80 | | |
| Tetra isopropyl titanate | | | 0.67 | |

Kaneka Silyl^{™} SAX510 and Kaneka Silyl^{™} SAX520 are both isocyanate free polymers having a polymeric chain of repeating polypropyleneoxide units and with trimethoxysilyl terminal groups;
XTCC-201 PCC is a surface treated precipitated calcium carbonate Jiangxi Xintai Chemical; Omyacarb^{®} 1T is a ground calcium carbonate from Omya having an average particle size of 2µm; The light stabilizer used was Tinuvin^{®} 765 from BASF, which we believe is a mixture of bis(1,2,2,6,6-pentamethyl-4-piperidyl)sebacate and methyl 1,2,2,6,6-pentamethyl-4-piperidyl sebacate;
Irganox^{®} 1076 by BASF is octadecyl-3-[3,5-di-tert-butyl-4-hydroxyphenyl]propionate]. It is a highly efficient sterically hindered phenolic primary antioxidant. Provides processing and long-term thermal stabilization; and
CRAYVALLAC ^{®} SLT is a high performance micronised amide wax rheology modifier from Arkema.

The comparative sealant compositions were prepared using the above compositions on a 10L Turello Mixer according to the process described as below.
Firstly, Kaneka Silyl^{™} SAX510 and Kaneka Silyl^{™} SAX520 polymers were introduced into the mixer. Subsequently the following ingredients were added sequentially, namely:-
DINP,
Irganox^{®} 1076,
Tinuvin^{®} 765, SLT,
Omyacarb^{®} 1T, R-630, and
XTCC-201 PCC.

The mixture was then stirred at 800 revolutions per minute (rpm) at full vacuum for 90 minutes at 105°C and cooled to < 45°C. Once the temperature of the composition was < 45°C, the remaining ingredients were added i.e. vinyltrimethoxy silane, the relevant catalyst(s), ethylenediaminepropyltrimethoxysilane and methyl acetoacetate. The final mixture was then mixed for a further 20 minutes in a nitrogen atmosphere and subsequently deaired by applying a vacuum at -75kPa pressure and then was then packaged into standard cartridges for testing.

The compositions prepared as described above were then tested for their physical properties as depicted in Table 2 below. All samples tested hereafter in accordance with (ASTM D412-98a (2002)e1) utilised dumbbell shaped test pieces.

**Table 2a: General Physical Properties of Comparative Examples**

| | Comp. 1 | Comp. 2 | Comp. 3 | Comp. 4 |
|---|---|---|---|---|
| Tack free time (TFT) (mins.) (ASTM C679-15) | >360 | 141 | >360 | >360 |
| Tensile strength (MPa) (ASTM D412-98a (2002)e1) | Not fully cure after 7 days | 0.95 | 0.82 | 0.93 |
| Elongation, % (ASTM D412-98a (2002)e1) | NA | 606 | 556 | 816 |
| Modulus at 100%, (MPa) (ASTM D412-98a (2002)e1) | NA | 0.387 | 0.355 | 0.135 |
| Modulus at 150%, (MPa) (ASTM D412-98a (2002)e1) | NA | 0.442 | 0.406 | |
| Modulus at 200%, (MPa) (ASTM D412-98a (2002)e1) | NA | 0.490 | 0.454 | 0.216 |
| Hardness, shore A (ASTM C 661-15) | NA | 16.7 | 15.8 | 6.3 |
| Elastic recovery, % | NA | 86.5 | 84.8 | 82.6 |

Elastic recovery: The length of 2.54cm (1.0 inch) was marked by ink on the dumbbell specimens with about 2mm in thickness as original length (A); The dumbbell was stretched by 100%, (i.e. to 5.08cm (2.0 inch)=B) and maintained at 100% extension for 24 hours; subsequently the dumbbell was released and allowed to recover for 1 hour; Test final length (C) between the marks. The elastic recovery was determined as = (B-C)/(B-A) * 100%

Adhesion properties of the Comparative examples were also assessed and are depicted in Table 2b below.

**Table 2b: Adhesion Properties of Comparative Examples**

| | Comp. 1 | Comp. 2 | Comp. 3 | Comp. 4 |
|---|---|---|---|---|
| Peel adhesion on concrete with primer P after 14 days cure, (% CF) ASTM C794-18 | NA | 70 | 100 | 100 |
| Peel stress on concrete with primer P after 14 days cure, (N/m) (average) ASTM C794-18 | NA | 4027.9 | 4658.4 | 844.1 |
| Peel adhesion on concrete with primer P after additional 1 day water immersion, (%CF) ASTM C794-18 | NA | 15 | 10 | 100 |
| Peel stress on concrete with primer P after additional 1 day water immersion, (N/m) (average) ASTM C794-18 | NA | 4203.0 | 3502.5 | 632.2 |

Primer P is DOWSIL^{™} Construction Primer P a commercially available Adhesion promoter from Dow Silicones Corporation for use on masonry surfaces. It comprises an alkoxy silane resin formulation in solvent.

Cohesive failure (CF) is observed when the coating itself breaks without detaching from the substrate (for example, steel plate). In some cases, a mixed failure mode may be observed; that is some areas peel-off (i.e. AF) while some remain covered with coating (i.e. CF). In such cases, the portions of surface displaying CF (%CF).

The Examples in accordance with this disclosure were also made via the same method as described above using the compositions depicted in Table 3 below

**Table 3 Composition of Examples**

| | Ex. 1 (wt. %) | Ex. 2 (wt. %) | Ex. 3 (wt. %) | Ex. 4 (wt. %) |
|---|---|---|---|---|
| Kaneka Silyl^{™} SAX510 | 13.69 | 13.78 | 13.69 | 13.78% |
| Kaneka Silyl^{™} SAX520 | 5.87 | 5.90 | 5.87 | 5.90% |
| Diisononyl phthalate (DINP) | 22.00 | 22.00 | 22.00 | 22.00% |
| Light Stabilizer | 0.23 | 0.23 | 0.23 | 0.23% |
| Irganox 1076 (antioxidant) | 0.23 | 0.23 | 0.23 | 0.23% |
| Rheology modifier | 2.20 | 2.20 | 2.20 | 2.20% |
| XTCC-201 Precipitated calcium carbonate | 22.0 | 22.0 | 22.0 | 22.0% |
| Omyacarb^{®} 1T Ground calcium carbonate | 29.8 | 29.8 | 29.8 | 29.8% |
| Titanium dioxide | 1.20 | 1.20 | 1.20 | 1.20% |
| vinyltrimethoxy silane | 1.40 | 1.40 | 1.40 | 1.40% |
| ethylenediaminepropyltrimethoxysilane | 0.07 | 0.07 | 0.07 | 0.07% |
| Ethylhexanoic acid zinc salt Zn(EHA)₂ | | | 0.52 | 0.52% |
| TtBT | | | 0.80 | |
| Ti(i-PrO)₄ | | | | 0.67% |
| TtBT : Zn(EHA)₂ (2:1 by Molar ratio) | 1.32 | | | |
| Ti(i-PrO)₄: Zn(EHA)₂ (2: 1 by Molar ratio) | | 1.19 | | |

**Table 4a: General Physical Properties of Examples**

| | Ex. 1 | Ex. 2 | Ex. 3 | Ex. 4 |
|---|---|---|---|---|
| Tack free time (TFT) (mins.) (ASTM C679-15) | 160 | 171 | 98 | 102 |
| Tensile strength (MPa) (ASTM D412-98a(2002)e1) | 0.72 | 0.71 | 0.73 | 0.66 |
| Elongation, % (ASTM D412-98a(2002)e1) | 529 | 697 | 681 | 696 |
| Modulus at 100%, (MPa) (ASTM D412-98a(2002)e1) | 0.358 | 0.325 | 0.304 | 0.274 |
| Modulus at 150%, (MPa) (ASTM D412-98a(2002)e1) | 0.421 | 0.388 | 0.379 | 0.346 |
| Modulus at 200%, (MPa) (ASTM D412-98a(2002)e1) | 0.464 | 0.431 | 0.425 | 0.392 |
| Hardness, shore A (ASTM C 661-15) | 14.5 | 13.8 | 13.8 | 12.3 |
| Elastic recovery, % | 87.1 | 84.6 | 84.0 | 81.2 |

**Table 4b: General Physical Properties of Examples**

| | Ex. 1 | Ex. 2 | Ex. 3 | Ex. 4 |
|---|---|---|---|---|
| Peel adhesion on concrete with primer P after 14 days cure, %CF (ASTM C794-18) | 100 | 100 | 100 | 100 |
| Peel stress on concrete with primer P after 14 days cure, N/m (average) (ASTM C794-18) | 3695.18 | 3677.67 | 3550.15 | 3082.23 |
| Peel adhesion on concrete with primer P after additional 1 day water immersion, %CF (ASTM C794-18) | 100 | 100 | 100 | 100 |
| Peel stress on concrete with primer P after additional 1 day water immersion, N/m (average) (ASTM C794-18) | 4780.96 | 4763.45 | 3239.85 | 3502.54 |

For comparative example 1, the sample with only Zn(EHA)₂ as catalyst cannot fully cure even after seven days conditioning at room temperature and proved low catalytic activity. As for comparative example 2 and 3 only with Ti catalyst, the samples can get low modulus and high elastic recovery, but the adhesion was not good on concrete, especially after water immersion condition. As for inventive examples 4, and 5 using the catalyst described herein, both samples recorded modulus values of less than 0.4MPa with elastic recovery above than 80% and had good adhesion on concrete. The addition of Zn(EHA)₂ and Ti separately as catalyst got similar results as the pre-mixing of Zn(EHA)₂ and Ti, such as the low modulus, high elastic recovery and good adhesion on concrete, as seen from inventive example 6 and 7.

**Table 5: Composition of Examples**

| | Ex. 5 (wt. %) | Ex. 6 (wt. %) | Ex. 7 (wt. %) |
|---|---|---|---|
| Kaneka Silyl^{™} SAX510 | 13.69% | 13.69% | 13.69% |
| Kaneka Silyl^{™} SAX520 | 5.87% | 5.87% | 5.87% |
| Diisononyl phthalate (DINP) | 22.00% | 22.00% | 22.00% |
| Light Stabilizer | 0.23% | 0.23% | 0.23% |
| Irganox 1076 (antioxidant) | 0.23% | 0.23% | 0.23% |
| Rheology modifier | 2.20% | 2.20% | 2.20% |
| XTCC-201 Precipitated calcium carbonate | 22.00% | 22.00% | 22.00% |
| Omyacarb^{®} 1T Ground calcium carbonate | 29.80% | 29.80% | 29.80% |
| Titanium dioxide | 1.20% | 1.20% | 1.20% |
| vinyltrimethoxy silane | 1.40% | 1.40% | 1.40% |
| ethylenediaminepropyltrimethoxysilane | 0.07% | 0.07% | 0.07% |
| Ethylhexanoic acid zinc salt Zn(EHA)₂ | 0.48% | 0.58% | 0.14% |
| Methyl acetoacetate | 0.48% | 0.58% | 0.14% |
| Ethylhexanoic acid zinc salt Zn(EHA)₂ | | 0.25% | -0.98% |
| Ethylhexanoic acid bismuth salt Bi(EHA)₃ | 0.75% | | |
| TtBT | -0.80% | 0.97% | 0.24% |

**Table 6a: General Physical Properties of Examples**

| | Ex. 5 | Ex. 6 | Ex. 7 |
|---|---|---|---|
| Tack free time (TFT) (mins.) (ASTM C679-15) | 259 | 70 | 98 |
| Tensile strength (MPa) (ASTM D412-98a(2002e 1)) | 0.83 | 0.79 | 0.58 |
| Elongation, % (ASTM D412-98a(2002e1)) | 763 | 550 | 803 |
| Modulus at 100%, (MPa) (ASTM D412-98a(2002e1)) | 0.200 | 0.301 | 0.116 |
| Modulus at 200%, (MPa) (ASTM D412-98a(2002e1)) | 0.290 | 0.442 | 0.197 |
| Hardness Shore A (ASTM C 661-15) | 10.2 | 14.6 | 5.8 |
| Elastic Recovery (%) | 75.4 | 84.6 | 79.7 |

**Table 6b: General Physical Properties of Examples**

| | Ex. 5 | Ex. 6 | Ex. 7 |
|---|---|---|---|
| Peel adhesion on concrete with primer P after 14 days cure, %CF (ASTM C794-18) | 100 | 100 | 100 |
| Peel stress on concrete with primer P after 14 days cure, N/m (average) (ASTM C794-18) | 3695.18 | 3677.66 | 3660.15 |
| Peel adhesion on concrete with primer P after additional 1 day water immersion, %CF (ASTM C794-18) | 100 | 100 | 100 |
| Peel stress on concrete with primer P after additional 1 day water immersion, N/m (average) (ASTM C794-18) | 4780. | 4763.45 | 3239.85 |

The standard JC/T881 classifies joint sealants which have a low modulus and high elastic recovery in classes 35LM and 50LM. Sealants meeting the technical requirements to be included in these classes are recognised as high-grade sealants, suitable as construction sealants, more particularly as exterior facing sealants. Whilst SMP based sealants which meet the requirements of class 35LM and/or 50 LM according to standard JC/T881 are known, they generally, contain organotin compounds as catalysts and/or phthalate-containing plasticizers both of which can have regulatory issues whereas we have shown that catalysts as described herein provide suitable elastomeric sealants.

## Claims

1. A one-part condensation curable silyl modified polymer-based sealant composition comprising:-
(a) a silyl modified organic polymer having at least two (R)ₘ(Y¹)₃₋ₘ- Si groups per molecule where each R is hydroxyl or a hydrolysable group, each Y¹ is an alkyl group containing from 1 to 8 carbons and m is 1, 2 or 3, which organic polymer is selected from polyethers, hydrocarbon polymers, acrylate polymers, polyesters, polyurethanes and polyureas;
and
(b) a reinforcing filler
(c) one or more plasticisers
and
(d) a catalyst comprising (i) a titanate and/or zirconate and (ii) a metal carboxylate salt selected from zinc (II) carboxylates, aluminium (III) carboxylates, bismuth (III) carboxylates and/or zirconium (IV) carboxylates, zinc (II) alkylcarboxylates, aluminium (III) alkylcarboxylates, bismuth (III) alkylcarboxylates and/or zirconium (IV) alkylcarboxylates or mixtures thereof.

2. A one-part condensation curable silyl modified polymer-based sealant composition in accordance with claim 1 wherein the metal carboxylate salt (ii) of catalyst (d) is selected from zinc ethylhexanoate, bismuth ethylhexanoate zinc stearate, zinc undecylenate, zinc neodecanoate, and iron (III) 2-ethylhexanoate.

3. A one-part condensation curable silyl modified polymer-based sealant composition in accordance with any preceding claim wherein titanate and/or zirconate (i) and metal carboxylate salt (ii) of catalyst (d) is provided in a molar ratio of 1:4 to 4:1.

4. A one-part condensation curable silyl modified polymer-based sealant composition in accordance with any preceding claim wherein polymer (a) is a polyether terminated with
(R)ₘ(Y¹)₃₋ₘ -Si - D- [NH-C(=O)]ₖ-
where each R is hydroxyl or a hydrolysable group, each Y¹ is an alkyl group containing from 1 to 8 carbons, m is 1, 2 or 3, D is a divalent C₂₋₆ alkylene group and k is 1 or 0.

5. A one-part condensation curable silyl modified polymer-based sealant composition in accordance with claim 4 wherein k is 0.

6. A one-part condensation curable silyl modified polymer-based sealant composition in accordance with any preceding claim which is gunnable and/or self-levelling, wherein gunnable is defined as having a minimum extrusion rate of 10 ml/min as measured by ASTM C1183-04 and self-levelling is measured in accordance with the description.

7. A one-part condensation curable silyl modified polymer-based sealant composition in accordance with any preceding claim capable of being applied as a paste to a joint between two adjacent substrate surfaces where it can be worked, prior to curing, to provide a smooth surfaced mass which will remain in its allotted position until it has cured into an elastomeric body adherent to the adjacent substrate surfaces.

8. A silicone elastomer which is the cured reaction product of the composition in accordance with any one of claims 1 to 7.

9. A silicone elastomer in accordance with claim 8 which upon cure provides a sealant with a low modulus of ≤ 0.45 MPa at 100% elongation measured in accordance with ASTM D412-98a(2002)e1 and/or has an elastic recovery of ≥ 80% as measured in accordance with the description

10. A method of making the one-part condensation curable silyl modified polymer-based sealant composition in accordance with any one of claims 1 to 7 by mixing all the ingredients together.

11. Use of a one-part condensation curable silyl modified polymer-based sealant composition in accordance with any one of claims 1 to 5 as a sealant in the facade, insulated glass, window construction, automotive, solar and construction fields.

12. A method for filling a space between two substrates so as to create a seal therebetween, comprising:
a) providing a one-part condensation curable silyl modified polymer-based sealant composition in accordance with any one of claims 1 to 7, and either
b) applying the silicone composition to a first substrate, and bringing a second substrate in contact with the silicone composition that has been applied to the first substrate, or
c) filling a space formed by the arrangement of a first substrate and a second substrate with the silicone composition and curing the silicone composition.

13. A method for filling a space between two substrates in accordance with claim 12 wherein the space is filled by introducing the one-part condensation curable silyl modified polymer-based sealant composition in accordance with any one of claims 1 to 7 by way of extrusion or through a sealant gun.

## Patentansprüche

1. Einteilige kondensationsaushärtbare silylmodifizierte polymerbasierte Dichtstoffzusammensetzung, umfassend: -
(a) ein silylmodifiziertes organisches Polymer, das mindestens zwei (R)ₘ(Y¹)₃-ₘ- Si-Gruppen pro Molekül aufweist, wobei jedes R Hydroxyl oder eine hydrolysierbare Gruppe ist, jedes Y¹ eine Alkylgruppe ist, die von 1 bis 8 Kohlenstoffatome enthält, und m 1, 2 oder 3 ist, wobei das organische Polymer aus Polyethern, Kohlenwasserstoffpolymeren, Acrylatpolymeren, Polyestern, Polyurethanen und Polyharnstoffen ausgewählt ist;
und
(b) einen verstärkenden Füllstoff
(c) einen oder mehrere Weichmacher
und
(d) einen Katalysator, umfassend (i) ein Titanat und/oder ein Zirkonat und (ii) ein Metallcarboxylatsalz, das aus Zink(II)-carboxylaten, Aluminium(III)-carboxylaten, Bismut(III)-carboxylaten und/oder Zirkonium(IV)-carboxylaten, Zink(II)-alkylcarboxylaten, Aluminium(III)-alkylcarboxylaten, Bismut(III)-alkylcarboxylaten und/oder Zirkonium(IV)-alkylcarboxylaten oder Mischungen davon ausgewählt ist.

2. Einteilige kondensationsaushärtbare silylmodifizierte polymerbasierte Dichtstoffzusammensetzung nach Anspruch 1, wobei das Metallcarboxylatsalz (ii) von Katalysator (d) aus Zinkethylhexanoat, Bismutethylhexanoatzinkstearat, Zinkundecylenat, Zinkneodecanoat und Eisen(III)-2-ethylhexanoat ausgewählt ist.

3. Einteilige kondensationsaushärtbare silylmodifizierte polymerbasierte Dichtstoffzusammensetzung nach einem der vorstehenden Ansprüche, wobei Titanat und/oder Zirkonat (i) und Metallcarboxylatsalz (ii) von Katalysator (d) in einem Molverhältnis von 1 : 4 bis 4 : 1 bereitgestellt sind.

4. Einteilige kondensationsaushärtbare silylmodifizierte polymerbasierte Dichtstoffzusammensetzung nach einem vorstehenden Anspruch, wobei Polymer (a) ein Polyether ist, der terminiert ist mit
(R)ₘ(Y¹)₃₋ₘ -Si - D- [NH-C(=O)]ₖ-
wobei jedes R Hydroxyl oder eine hydrolysierbare Gruppe ist, jedes Y¹ eine Alkylgruppe ist, die von 1 bis 8 Kohlenstoffatome enthält, m 1, 2 oder 3 ist, D eine zweiwertige C₂₋₆-Alkylengruppe ist und k 1 oder 0 ist.

5. Einteilige kondensationsaushärtbare silylmodifizierte polymerbasierte Dichtstoffzusammensetzung nach Anspruch 4, wobei k 0 ist.

6. Einteilige kondensationsaushärtbare silylmodifizierte polymerbasierte Dichtstoffzusammensetzung nach einem vorhergehenden Anspruch, die per Pistole spritzbar und/oder selbstnivellierend ist, wobei per Pistole spritzbar als eine minimale Extrusionsrate von 10 ml/min aufweisend, wie nach ASTM C1183-04 gemessen, definiert ist und selbstnivellierend gemäß der Beschreibung gemessen ist.

7. Einteilige kondensationsaushärtbare silylmodifizierte polymerbasierte Dichtstoffzusammensetzung nach einem der vorstehenden Ansprüche, die in der Lage ist, als eine Paste auf eine Fuge zwischen zwei angrenzenden Substratoberflächen aufgebracht zu werden, wo sie, vor einem Aushärten, bearbeitet werden kann, um eine glatte Oberflächenmasse bereitzustellen, die in ihrer zugewiesenen Position bleibt, bis sie zu einem elastomeren Körper ausgehärtet ist, der an den angrenzenden Substratoberflächen haftet.

8. Silikonelastomer, das das ausgehärtete Reaktionsprodukt der Zusammensetzung nach einem der Ansprüche 1 bis 7 ist.

9. Silikonelastomer nach Anspruch 8, das bei einer Aushärtung einen Dichtstoff mit einem niedrigen Modul von ≤ 0,45 MPa bei 100 % Dehnung, gemäß ASTM D412-98a(2002)e1 gemessen, bereitstellt und/oder eine elastische Erholung von ≥ 80 %, wie gemäß der Beschreibung gemessen, aufweist

10. Verfahren zum Herstellen der einteiligen kondensationsaushärtbaren silylmodifizierten polymerbasierten Dichtstoffzusammensetzung nach einem der Ansprüche 1 bis 7 durch ein Zusammenmischen aller Bestandteile.

11. Verwendung einer einteiligen kondensationsaushärtbaren silylmodifizierten polymerbasierten Dichtstoffzusammensetzung nach einem der Ansprüche 1 bis 5 als ein Dichtstoff in den Bereichen Fassade, Isolierglas, Fensterbau, Automobil, Solar und Bau.

12. Verfahren zum Füllen eines Raums zwischen zwei Substraten, um dazwischen eine Abdichtung zu erzeugen, umfassend:
a) Bereitstellen einer einteiligen kondensationsaushärtbaren silylmodifizierten polymerbasierten Dichtstoffzusammensetzung nach einem der Ansprüche 1 bis 7 und entweder
b) Aufbringen der Silikonzusammensetzung auf ein erstes Substrat und Inberührungbringen eines zweiten Substrats mit der auf das erste Substrat aufgebrachten Silikonzusammensetzung oder
c) Füllen eines durch die Anordnung eines ersten Substrats und eines zweiten Substrats gebildeten Raums mit der Silikonzusammensetzung und Aushärten der Silikonzusammensetzung.

13. Verfahren zum Füllen eines Raums zwischen zwei Substraten nach Anspruch 12, wobei der Raum durch ein Einbringen der einteiligen kondensationsaushärtbaren silylmodifizierten polymerbasierten Dichtstoffzusammensetzung nach einem der Ansprüche 1 bis 7 über eine Extrusion oder durch eine Dichtstoffpistole gefüllt wird.

## Revendications

1. Composition d'étanchéité à base de polymère modifié par un silyle durcissable par condensation en une partie comprenant : -
(a) un polymère organique modifié par silyle, ayant au moins deux groupes (R)ₘ(Y¹)₃₋ₘ-Si par molécule, où chaque R est hydroxyle ou un groupe hydrolysable, chaque Y¹ est un groupe alkyle contenant de 1 à 8 carbones et m vaut 1, 2 ou 3, lequel polymère organique est choisi parmi polyéthers, polymères hydrocarbonés, polymères acrylate, polyesters, polyuréthanes et polyurées ;
et
(b) une charge de renforcement
(c) un ou plusieurs plastifiants
et
(d) un catalyseur comprenant (i) un titanate et/ou zirconate et (ii) un sel de carboxylate métallique choisi parmi le zinc (II) carboxylates, l'aluminium (III) carboxylates bismuth (III) carboxylates et/ou zirconium (IV) carboxylates, alkylcarboxylates de zinc (II), alkylcarboxylates d'aluminium (III), alkylcarboxylates de bismuth (III) et/ou zirconium alkylcarboxylates (IV) ou mélanges de ceux-ci.

2. Composition d'étanchéité à base de polymère modifié par un silyle durcissable par condensation en une partie selon la revendication 1, dans laquelle le sel carboxylate de métal (ii) du catalyseur (d) est choisi parmi éthylhexanoate de zinc, éthylhexanoate de bismuth, stéarate de zinc, undécylénate de zinc, néodécanoate de zinc et 2-éthylhexanoate de fer (III).

3. Composition d'étanchéité à base de polymère modifié par un silyle durcissable par condensation en une partie selon l'une quelconque revendication précédente, dans laquelle le titanate et/ou le zirconate (i) et le sel carboxylate de métal (ii) du catalyseur (d) sont fournis dans un rapport molaire de 1:4 à 4:1.

4. Composition d'étanchéité à base de polymère modifié par un silyle durcissable par condensation en une partie selon l'une quelconque revendication précédente, dans laquelle le polymère est un polyéther terminé par
(R)ₘ(Y¹)₃₋ₘ -Si - D- [NH-C(=O)]ₖ-
où chaque R est hydroxyle ou un groupe hydrolysable, chaque Y¹ est un groupe alkyle contenant de 1 à 8 carbones, m vaut 1, 2 ou 3, D est un groupe alkylène divalent en C₂₋₆ et k vaut 1 ou 0.

5. Composition d'étanchéité à base de polymère modifié par un silyle durcissable par condensation en une partie selon la revendication 4, dans laquelle k vaut 0.

6. Composition d'étanchéité à base de polymère modifié par le silyle durcissable par condensation en une partie selon l'une quelconque revendication précédente, qui peut être gonflée et/ou autonivelante, dans laquelle gonnable est défini comme ayant une vitesse d'extrusion minimale de 10 ml/min telle que mesurée par la norme ASTM C1183-04 et autonivelante est mesurée conformément à la description.

7. d'étanchéité à base de polymère modifié par un silyle durcissable par condensation en une partie selon l'une quelconque revendication précédente, pouvant être appliquée sous forme de pâte sur un joint entre deux surfaces de substrat adjacentes où elle peut être travaillée, avant durcissement, pour fournir une masse de surface lisse qui restera dans sa position allouée jusqu'à ce qu'elle ait durci en un corps élastomère adhérant aux surfaces de substrat adjacentes.

8. Composition d'étanchéité à base de polymère modifié par un silyle durcissable par condensation en une partie selon l'une quelconque des revendications 1 à 7.

9. Élastomère de silicone selon la revendication 8 qui, une fois durci, fournit un produit d'étanchéité avec une faible module de ≤ 0,45 MPa à 100 % d'allongement mesuré conformément à la ASTM D412-98a(2002)e 1 et/ou a une recouvrance élastique de ≥ 80 % mesurée conformément à la description

10. Composition d'étanchéité à base de polymère modifié par un silyle durcissable par condensation en une partie selon l'une quelconque des revendications 1 à 7 en mélangeant tous les ingrédients ensemble.

11. Utilisation d'une composition d'étanchéité à base de polymère modifié par un silyle durcissable par condensation en une partie selon l'une quelconque des revendications 1 à 5 en tant que produit d'étanchéité dans les domaines des façades, du verre isolant, de la construction de fenêtres, de l'automobile, de l'énergie solaire et de la construction.

12. Procédé de remplissage d'un espace entre deux substrats de manière à créer un joint d'étanchéité entre eux, comprenant :
a) la fourniture d'une composition d'étanchéité en deux parties, durcissable par condensation, à base de polymère modifié par silyle, conformément à l'une quelconque des revendications 1 à 7, et soit
b) l'application de la composition de silicone sur un premier substrat, et le fait d'amener un second substrat en contact avec la composition de silicone qui a été appliquée sur le premier substrat, soit
c) le remplissage d'un espace formé par l'agencement d'un premier substrat et d'un second substrat avec la composition de silicone et le durcissement de la composition de silicone.

13. Procédé pour le remplissage d'un espace entre deux substrats selon la revendication 12, dans lequel l'espace est rempli en introduisant la composition d'étanchéité à base de polymère modifié par silyle durcissable en une partie par condensation selon l'une quelconque des revendications 1 à 7 par extrusion ou à travers un pistolet d'étanchéité.
